# EUROPÄISCHE PATENTSCHRIFT

(11) **EP 0 459 109 B1**
(45) Veröffentlichungstag und Bekanntmachung des Hinweises auf die Patenterteilung: **14.09.1994**
(21) Anmeldenummer: 91105402.1
(22) Anmeldetag: 05.04.1991
(51) Int. Cl.: A01F 12/44, A01D 75/28

(54) **Vorrichtung zur gleichmässigen Gutverteilung bei Mähdreschern**
Apparatus for evenly distributing crop in a combine harvester
Appareil pour la répartition uniforme de produits dans une moissonneuse-batteuse

(30) Priorität: 25.05.1990 DE 4016878
(43) Veröffentlichungstag der Anmeldung: 04.12.1991
(73) Patentinhaber: CLAAS OHG, D-33426 Harsewinkel (DE)
(72) Erfinder: Glaubitz, Franz, W-4834 Harsewinkel (DE); Strickmann, Dieter, W-4413 Beelen (DE)
(74) Vertreter: Hanewinkel, Lorenz, Dipl.-Phys.

(56) Entgegenhaltungen:
- EP-A- 0 144 292
- EP-A- 0 323 833
- DE-A- 2 638 240
- DE-A- 2 851 777
- DE-B- 1 937 835
- DE-U- 8 804 062
- FR-A- 2 216 900

## Beschreibung

Die Erfindung bezieht sich auf eine Vorrichtung zur gleichmäßigen Verteilung des Gutes für hin- und herschwingende Förder- und Siebeinrichtungen eines Mähdreschers beim Hangdrusch, mit einem unterhalb einer Drescheinrichtung und oberhalb von Sieben angeordneten, schwingend gelagerten Vorbereitungsboden mit Stromführungen und mindestens einem in Abhängigkeit von der Vorbereitungsbodenneigung verstellbaren Gutverteiler.

Eine derartige Vorrichtung ist aus der EP-A-0 323 833 bekannt. Hierbei ist ein Vorbereitungsboden mit zugeordneten Gutverteilern geoffenbart, der für eine Siebgutvergleichmäßigung beim Hangdrusch sorgt. Eine Austauschbarkeit des Vorbereitungsbodens ist nicht vorgesehen.

Weiterhin ist aus der DE-A-2 638 240 ein aus Bodenhälften gebildeter ausbaubarer Förderboden bekannt, wofür speziell ausgestaltete Führungen vorgesehen sind.

Weiterhin sind aus der DE-B-30 08 385, der DE-B-33 32 763 und der DE-U-8 804 062 ähnliche Vorrichtungen bekannt geworden, bei denen im Gutaufgabebereich oberhalb des Vorbereitungsbodens der oder die Gutverteiler sich erstrecken und deren Antriebsmittel für die Verschwenkung oder Rotation durch den Vorbereitungsboden nach unten geführt und mittelbar mit einer Steuereinrichtung verbunden sind.

Nach einer gewissen Dreschzeit setzen sich die Vorbereitungsböden mit Dreschgut zu und erfordern somit eine Reinigung, die je nach Arbeitskapazität mehrfach am Tag erforderlich werden kann.

Hierfür müssen die Vorbereitungsböden aus dem Mähdrescher herausgenommen werden, was eine arbeits- und zeitaufwendige Demontage im Bereich der Gutverteiler und deren Antriebsmittel erfordert und somit äußerst umständlich ist.

Aufgabe der Erfindung ist es deshalb, den bzw. die Vorbereitungsböden in seiner bzw. ihrer Lagerung derart zu gestalten, daß der bzw. die Vorbereitungsböden unabhängig von den Gutverteilern und deren Antriebsmittel in einfacher und schneller Weise mit wenigen Handgriffen zu Reinigungszwecken aus- und eingebaut werden kann bzw. können.

Diese Aufgabe wird erfindungsgemäß durch die kennzeichnenden Merkmale des Patentanspruches 1 gelöst, wobei noch die in den einzelnen Unteransprüchen aufgeführten Gestaltungsmerkmale vorteilhafte Weiterbildungen der Aufgabenlösung beinhalten.

Durch die Erfindung ist ein einfaches, schnelles und mit wenigen Handgriffen durchführbares Aus- und Einbauen der Vorbereitungsböden für Reinigungszwecke geschaffen worden, da diese unabhängig von den Antriebsmitteln der Gutverteiler und somit ohne Demontage von Bauteilen der Gutverteiler aus ihrer Lagerung herausgenommen und wieder eingesetzt werden können. Dieses ist dadurch erreicht worden, daß der oder die Vorbereitungsböden verschiebbar in einem Rahmen gelagert sind und mit einer Schlitzführung um die Antriebsachse der Gutverteiler greifen, so daß sich der oder die Vorbereitungsböden in einfacher Weise unter den Gutverteilern herausziehen und wieder in diese einschieben lassen.

Die Lagerung dieser herausnehmbaren Vorbereitungsböden ist äußerst einfach und kostengünstig ausgeführt.

Weiterhin von Vorteil ist die automatische und in Abhängigkeit von der Mähdrescherneigung erfolgende schwenkbare Lagerung des Fahrersitzes mit Bedienpult im Mähdrescher, wodurch bei jeder Neigungsveränderung der Fahrersitz stets in seine waagerechte Lage gebracht und gehalten wird, was die Aufgabe einer bequemen Sitzhaltung für den Fahrer, auch beim Hangdrusch, löst.

Auf den Zeichnungen ist ein Ausführungsbeispiel der Erfindung dargestellt, welches nachfolgend näher erläutert wird. Es zeigt:
- Fig. 1: eine schematische Seitenansicht eines Teilbereiches eines Mähdreschers mit Förder- und Siebeinrichtungen,
- Fig. 2 und 3: schematische Draufsichten auf einen Vorbereitungsboden mit rotierenden bzw. verschwenkenden Gutverteiler,
- Fig. 4: eine Draufsicht auf zwei nebeneinander angeordneten und in Verschiebeführungen auswechselbar gelagerten Vorbereitungsböden,
- Fig. 5: einen Querschnitt gemäß Schnittlinie I-I in Fig. 4 der beiden in den Verschiebeführungen gelagerten Vorbereitungsböden,
- Fig. 6: einen Längsschnitt durch einen Teilbereich des Vorbereitungsbodens gemäß Schnittlinie IV-IV in Fig. 4,
- Fig. 7: einen Querschnitt durch einen Teilbereich des Vorbereitungsbodens mit Gutverteiler und Antriebsmittel für den Gutverteiler gemäß Schnittlinie III-III in Fig. 4,
- Fig. 8: einen Querschnitt durch einen Vorbereitungsboden mit Schlitzführung gemäß Schnittlinie II-II in Fig. 4,

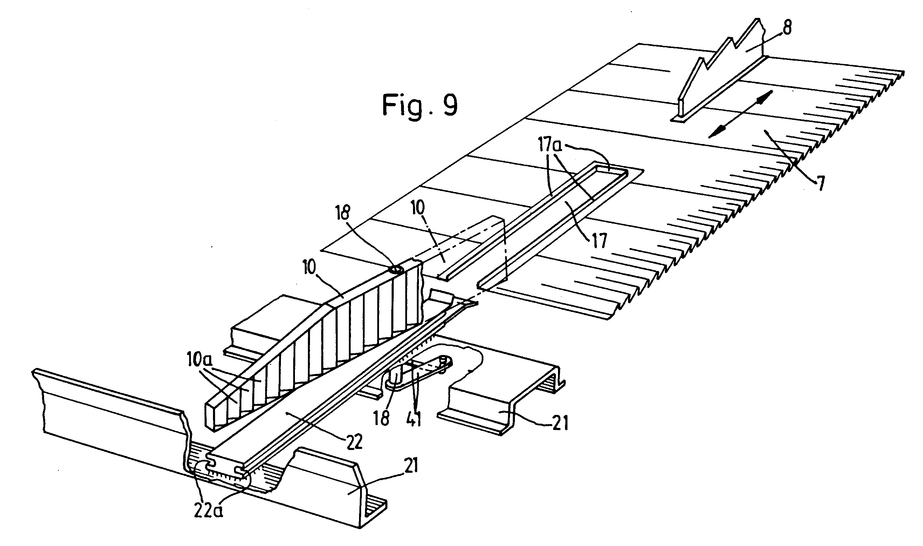

- Fig. 9: eine perspektivische Darstellung im teilweisen Schnitt eines Vorbereitungsbodens mit Gutverteiler im herausgenommenen Zustand des Vorbereitungsbodens,
- Fig. 10: eine schematische Darstellung eines Vorbereitungsbodens mit zugeordneter Steuereinrichtung für die Gutverteiler,

Die Vorrichtung zur gleichmäßigen Verteilung des Gutes auf hin- und herschwingenden Förder- und Siebeinrichtungen (1) eines Mähdreschers (2) beim Hangdrusch weist einen unterhalb einer Druscheinrichtung (Dreschtrommel (3) und Dreschkorb (4)) und oberhalb von Sieben (Obersieb (5) und Untersieb (6)) angeordneten, schwingend gelagerten Vorbereitungsboden (7) mit Stromführungen (8) und mindestens einen in Abhängigkeit von der Vorbereitungsbodenneigung verstellbaren Gutverteiler (9, 10) auf.

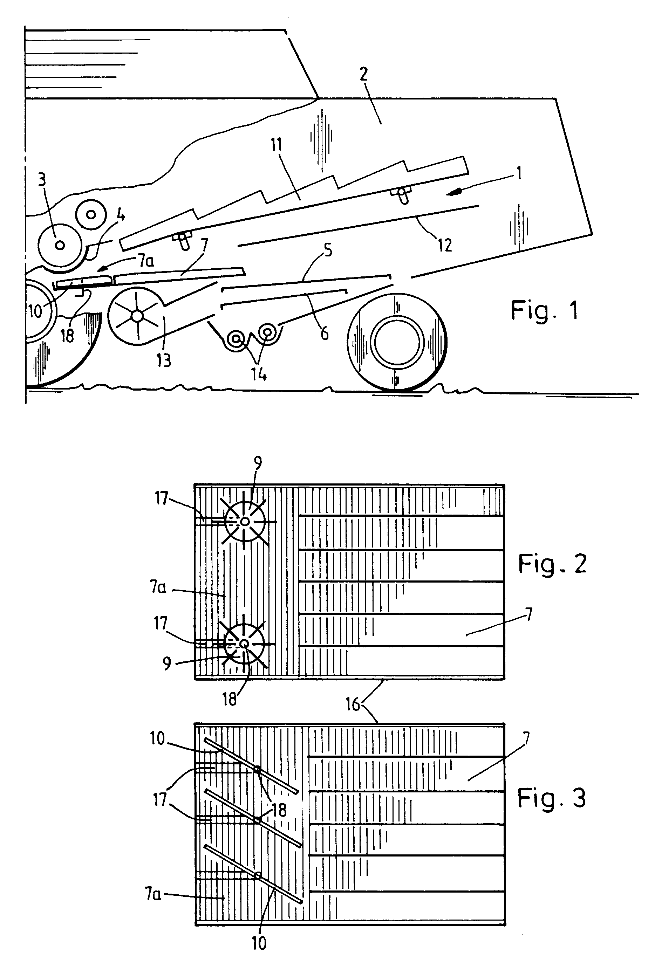

Gemäß Fig. 1 ist der Drescheinrichtung (3, 4) ein Schüttler (11) nachgeschaltet, der oberhalb des Vorbereitungsbodens (7) und der Siebe (5, 6) sich erstreckt und unter dem ein Korn-Rücklaufboden (12) liegt.

Den Sieben (5, 6) ist ein Gebläse (13) und eine Austrageinrichtung (14) für das Siebgut zugeordnet.

Der Vorbereitungsboden (7) ist in seiner Lagerung lösbar und unabhängig vom Gutverteiler (9, 10) herausnehmbar gehalten. Dabei lagert der Vorbereitungsboden (7) in bevorzugter Weise in einem Verschiebeführungen (15) bildenden Rahmen (16) einschiebbar und herausziehbar.

Der unter dem oder den Gutverteilern (9, 10) in der eingeschobenen Stellung mit seinem die Gutaufgabe bildenden Längenendbereich (7a) liegende Vorbereitungsboden (7) ist mit einer Schlitzführung (17) um das Antriebsmittel (18) jedes Gutverteilers (9, 10) einschiebbar und herausziehbar vorgesehen.

Dem Vorbereitungsboden (7) lassen sich ein oder zwei oder mehrere Gutverteiler (9, 10) zuordnen, wobei diese Gutverteiler (9) von rotierenden Schaufelrädern (Fig. 2) oder die Gutverteiler (10) von schwenkbaren Leitblechen (Fig. 3) gebildet sind.

Jeder Gutverteiler (9, 10) ist dabei um eine Achse (18) als Antriebsmittel drehbar bzw. schwenkbar vorgesehen.

In dem Rahmen (16) kann ein Vorbereitungsboden (7) oder zwei oder mehrere Vorbereitungsböden (7) herausnehmbar gehalten sein, was abhängig von der Größe des Mähdreschers ist.

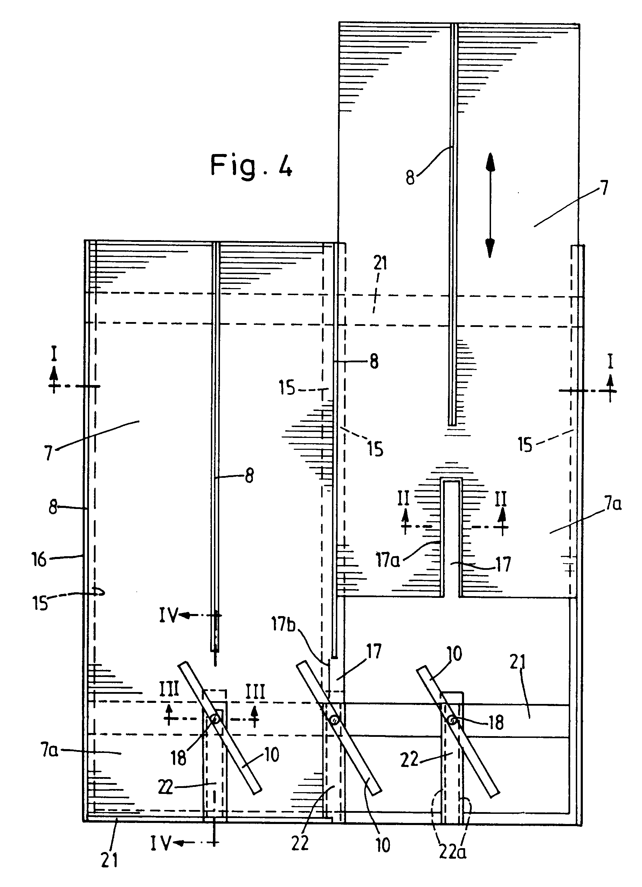

In Fig. 4 sind in einem Rahmen (16) zwei Vorbereitungsböden (7) nebeneinander herausziehbar gelagert und diesen beiden Vorbereitungsböden (7) sind drei von Leitblechen gebildete Gutverteiler (10) zugeordnet.

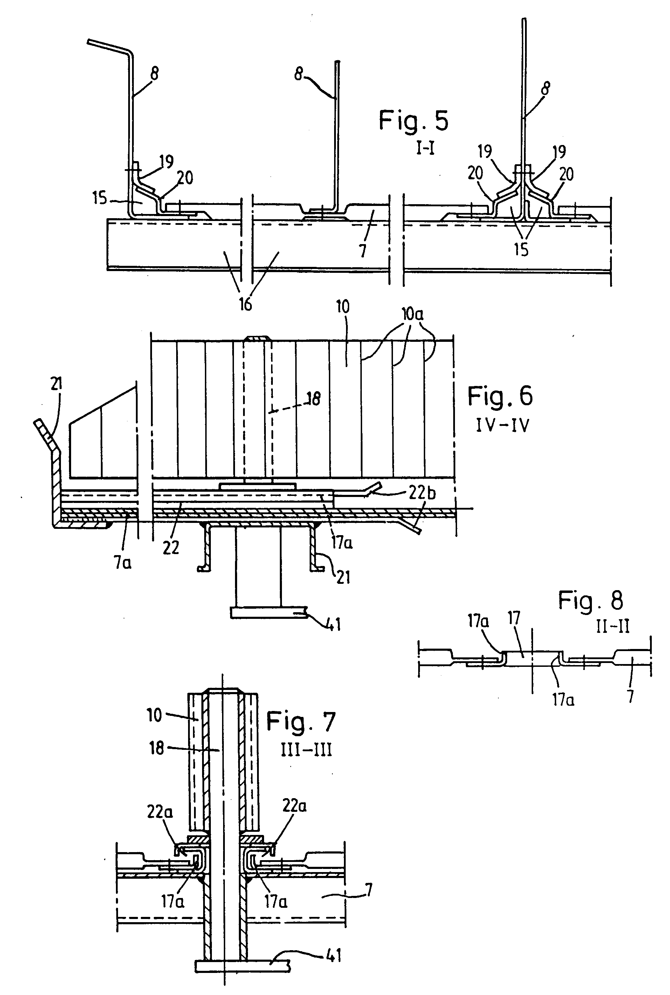

Die Verschiebeführungen (15) sind gemäß Fig. 4 und 5 von auf dem Rahmen (16) festgelegten, aufrechten Stromführungen (8) in Form von sich über die gesamte Vorbereitungsbodenlänge erstreckenden Leitblechen und daran befestigten Dichtleisten (19) gebildet und der Vorbereitungsboden (7) greift mit an seinen Längsseiten befestigten Leisten (20) unter die Dichtleisten (19) abgedichtet ein.

Im mittleren Längsbereich jedes Vorbereitungsbodens (7) ist ebenfalls eine von einem Leitblech gebildete Stromführung (8) befestigt, die in Längsrichtung des Vorbereitungsbodens (7) verläuft und mit Abstand vor dem Gutverteiler (9, 10) endet.

Bei der Anordnung von zwei nebeneinanderliegenden Vorbereitungsböden (7) gemäß Fig. 4 und 5 bildet die mittlere, im Längsstoßbereich beider Vorbereitungsböden (7) verlaufende Stromführung (8) zwei Verschiebeführungen (15) mit zwei Dichtleisten (19).

Der Rahmen (16) ist durch mehrere Querverstrebungen (21) ausgesteift und durch eine Querverstrebung (21) greifen die aufrechten, achsenförmigen Antriebsmittel (18).

Auf den beiden im Gutaufgabebereich (7a) verlaufenden Querverstrebungen (21) ist eine in Längsrichtung des Vorbereitungsbodens (7) verlaufende Einschiebeführung (22) für die Schlitzführung (17) des Vorbereitungsbodens (7) festgelegt. Die Schlitzführung (17) ist von dem Schlitz und hochgekanteten Schiebeleisten (17a) gebildet und die Einschiebeführung (22) von einem Profil mit zwei im Querschnitt U- oder J-artigen Einschiebekanälen (22a) für die Schiebeleisten (17a) gebildet.

Am einschiebeseitigen Längenende weist die Einschiebeführung (22) Einlaufschrägen (22b) zum leichten Einschieben des Vorbereitungsbodens (7) mit seiner Schlitzführung (17) auf.

Die von Leitblechen gebildeten Gutverteiler (10) zeigen in bevorzugter Weise an beiden Längsseiten sägezahnartige Mitnehmer (10a), durch die das Siebgut eine verbesserte Schubwirkung entgegen der Vorbereitungsbodenneigung erhält.

Die Verstellung aller Leitbleche (10) eines oder mehrerer Vorbereitungsböden (7) erfolgt automatisch durch eine hydraulische Steuereinrichtung (23) in Abhängigkeit der Neigungslage des Mähdreschers (2) und somit des Vorbereitungsbodens (7).

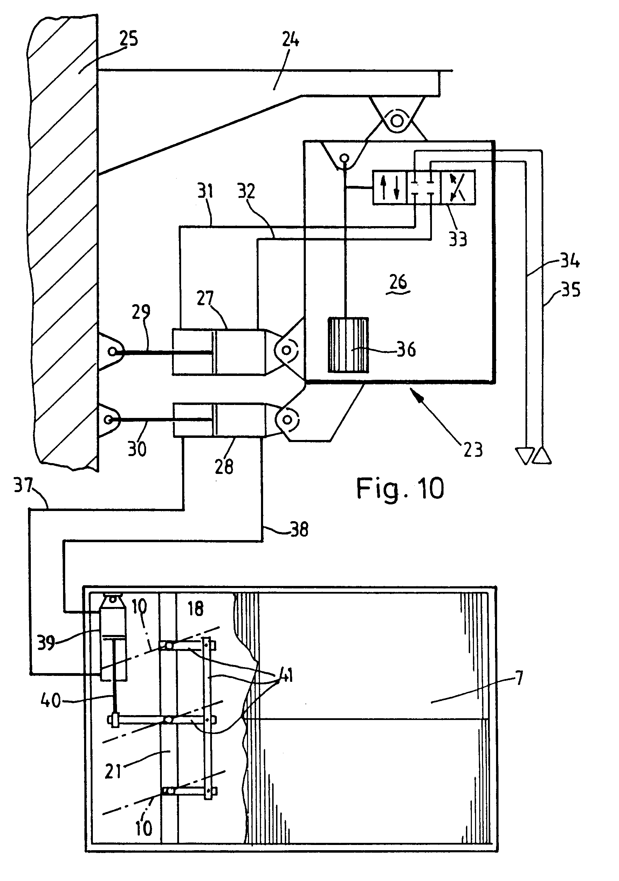

Diese Steuereinrichtung (23) gemäß Fig. 10 weist eine an einem Tragarm (24), der an einem Bauteil (25) des Mähdreschers befestigt ist, schwenkbar aufgehängte Steuereinheit (26) auf, die durch zwei Druckmittelzylinder (27, 28) mit ihren Kolbenstangen (29, 30) an dem Mähdrescherbauteil (25) abgestützt ist, wobei die Druckmittelzylinder (27, 28) schwenkbar an der Steuereinheit (26) und die Kolbenstangen (29, 30) schwenkbar am Mähdrescherbauteil (25) gelagert sind.

Die beiden Druckräume des Druckmittelzylinders (27) sind über Hydraulikleitungen (31, 32) von einem Regelventil (33) beaufschlagbar, welches über Leitungen (34, 35) mit einem nicht dargestellten Druckmittel-Vorratsbehälter verbunden ist.

Innerhalb der Steuereinheit (26) ist ein Pendel (36) vorgesehen. Bei Relativbewegungen des Pendels (36) zur Steuereinheit (26) bei entsprechender Neigungslage des Mähdreschers wird das Regelventil (33) derart beaufschlagt, daß dieses die entsprechende Hydraulikleitung (31, 32) so lange mit dem Druckmedium beaufschlagt, bis der Zylinder (27) die Steuereinheit (26) in eine parallele Lage zum Pendel (36) verschwenkt hat. Dabei wird die Kolbenstange (29) ein- bzw. ausgefahren und analog dazu der zweite Zylinder (28) durch Ein- bzw . Ausfahren seiner Kolbenstange (30) betätigt.

Dieser Druckmittelzylinder (28) steht über zwei Druckmittelleitungen (37, 38) mit einem dritten Druckmittelzylinder (39) in Verbindung, welcher unterhalb des Vorbereitungsbodens (7) angeordnet ist und dessen Kolbenstange (40) an ein Gestänge (41) angreift, welches mit den Antriebsachsen (18) der Leitbleche (10) verbunden ist.

Durch den entsprechenden Druckmittelfluss aus einem der Druckräume des Zylinders (28) bei einer Ausfahrbewegung des Zylinders (27) wird der angeschlossene Druckraum unter Entlastung des anderen Druckraumes des Zylinders (39) beaufschlagt und die dadurch erwirkte Ein- bzw. Ausfahrbewegung der Kolbenstange (40) ergibt eine Verstellung der miteinander gekoppelten Leitbleche (10) über das Gestänge (41).

Die rotierenden Gutverteiler (9) lassen sich ebenfalls über eine derartige Steuereinrichtung (23) verdrehen, können aber auch in anderer Weise motorisch in Rotation versetzt werden.

Jeder Vorbereitungsboden (7) ist zu Reinigungszwecken mit wenigen Handgriffen aus dem Rahmen (16) herausziehbar, wobei durch die die Antriebsachsen (18) umgreifende Schlitzführung (17) keine Demontage zwischen Antriebsachsen (18) und Gestänge (41) erforderlich ist, sondern der Vorbereitungsboden (7) ohne weiteres unter den Gutverteilern (9, 10) herausgezogen und auch wieder eingeschoben werden kann.

Bei der Anordnung zweier nebeneinander und unabhängig voneinander verschiebbarer Vorbereitungsböden (7) in dem Rahmen (16) ist jedem Vorbereitungsboden (7) ein mittlerer Gutverteiler (9, 10) zugeordnet und im aneinanderstoßenden Längskantenbereich der beiden Vorbereitungsböden (7) liegt ein mittlerer Gutverteiler (9, 10), dessen Antriebsmittel (18) von ausgesparten Randbereichen (17b) der Vorbereitungsböden (7) unter Bildung einer Schlitzführung (17) umfaßt ist.

Das Bedienpult (46) kann separat oder mit dem Fahrersitz (42) verbunden angeordnet sein.

## Patentansprüche

1. Vorrichtung zur gleichmäßigen Verteilung des Gutes für hin- und herschwingende Förder- und Siebeinrichtungen eines Mähdreschers beim Hangdrusch, mit einem unterhalb einer Drescheinrichtung und oberhalb von Sieben angeordneten, schwingend gelagerten Vorbereitungsboden (7) mit Stromführungen (8) und mindestens einem in Abhängigkeit von der Vorbereitungsbodenneigung verstellbaren Gutverteiler (9,10), dadurch gekennzeichnet, daß der Vorbereitungsboden (7) in einem Verschiebeführungen (15) bildenden Rahmen (16) unabhängig vom Gutverteiler (9,10) herausnehmbar gehalten ist und in der eingeschobenen, unter dem Gutverteiler (9,10) liegenden Arbeitsstellung mit einer in seinem die Gutaufgabe bildenden Längenendbereich (7a) angeordneten Schlitzführung (17) das Antriebsmittel (18) des Gutverteilers (9,10) verschiebbar umgreift.

2. Vorrichtung nach Anspruch 1, dadurch gekennzeichnet, daß die Verschiebeführungen (15) von auf dem Rahmen (16) festgelegten, von aufrechten Leitblechen gebildeten Stromführungen (8) und daran befestigten Dichtleisten (19) gebildet sind, in die der Vorbereitungsboden (7) mit an seinen Längsseiten befestigten Leisten (20) abgedichtet eingreift.

3. Vorrichtung nach Anspruch 1 oder 2, dadurch gekennzeichnet, daß in dem Rahmen (16) ein, zwei oder mehrere Vorbereitungsböden (7) verschiebbar gelagert sind, wobei die jeweils zwischen benachbarten Vorbereitungsböden (7) verlaufende Stromführung (8) beidseitig eine Verschiebeführung (15) bildet.

4. Vorrichtung nach einem der Ansprüche 1 bis 3, dadurch gekennzeichnet, daß auf der Breitenhalbierenden jedes Vorbereitungsbodens (7) eine in Längsrichtung verlaufende, von einem aufrechten Leitblech gebildete Stromführung (8) festgelegt ist, welche in Längsrichtung des Vorbereitungsbodens (7) bis nahe an den Gutverteiler (9, 10) verläuft.

5. Vorrichtung nach einem der Ansprüche 1 bis 4, dadurch gekennzeichnet, daß der Rahmen (16) durch mehrere Querverstrebungen (21) ausgesteift ist und durch eine im Gutaufgabebereich (7a) verlaufende Querverstrebung (21) für jeden Gutverteiler (9, 10) eine aufrechte Schwenk- oder Drehachse als Antriebsmittel (18) greift.

6. Vorrichtung nach einem der Ansprüche 1 bis 5, dadurch gekennzeichnet, daß auf den beiden im Gutaufgabebereich (7a) verlaufenden Querverstrebungen (21) eine in Längsrichtung des Vorbereitungsbodens (7) verlaufende Einschiebeführung (22) für die Schlitzführung (17) des Vorbereitungsbodens (7) festgelegt ist und dabei das achsenförmige Antriebsmittel (18) des Gutverteilers (9,10) durch die Querverstrebung (21) und die Einschiebeführung (22) greift.

7. Vorrichtung nach einem der Ansprüche 1 bis 6, dadurch gekennzeichnet, daß die Einschiebeführung (22) von einem Profil mit zwei auf beiden Profilseiten liegenden, im Querschnitt U- oder J-artigen Einschiebekanälen (22a) gebildet ist, in die die Schlitzführung (17) des Vorbereitungsbodens (7) mit Schiebeleisten (17a) eingreift.

8. Vorrichtung nach einem der Ansprüche 1 bis 7, dadurch gekennzeichnet, daß am einschiebeseitigen Längenende jeder Einschiebeführung (22) Einlaufschrägen (22b) für das Einschieben des Vorbereitungsbodens (7) mit seiner Schlitzführung (17) vorgesehen sind.

9. Vorrichtung nach einem der Ansprüche 1 bis 8, dadurch gekennzeichnet, daß die von Leitblechen gebildeten Gutverteiler (10) an beiden Längsseiten sägezahnartige oder schuppenförmige Mitnehmer (10a) für das Siebgut aufweisen.

10. Vorrichtung nach einem der Ansprüche 1 bis 9, dadurch gekennzeichnet, daß der oder die Gutverteiler (9, 10) über ein gemeinsames Gestänge (41) mit einem unterhalb des Rahmens (16) angeordneten Druckmittelzylinder (39) bewegungsmäßig verbunden sind, der mit einer in Abhängigkeit von der Vorbereitungsbodenneigung arbeitenden Steuereinrichtung (23) in Verbindung steht.

11. Vorrichtung nach einem der Ansprüche 1 bis 10, dadurch gekennzeichnet, daß bei der Anordnung zweier nebeneinander und unabhängig voneinander verschiebbarer Vorbereitungsböden (7) in dem Rahmen (16) jedem Vorbereitungsboden (7) ein mittiger Gutverteiler (9, 10) zugeordnet ist und im aneinanderstoßenden Längskantenbereich der beiden Vorbereitungsböden (7) ein mittlerer Gutverteiler (9, 10) liegt und dabei zur Bildung einer Schlitzzuführung (17) ausgesparte Randbereiche (17b) aufweisen.

## Claims

1. Apparatus for uniformly distributing the product to pendulum-action feeding and sieving devices on a combine harvester when combining on sloping ground, comprising a vibration-mounted preparation floor (7) arranged beneath a threshing device and above sieves, with flow guides (8) and at least one product distributor (9, 10) which can be adjusted in dependence on the inclination of the preparation floor,
characterized in that the preparation floor (7) is held, in a frame (16) which forms displacement guides (15), so as to be removable independently of the product distributor (9, 10, and in the operating position, once it has been inserted underneath the product distributor (9, 10), clasps the driving means (18) for the product distributor (9, 10) in displaceable manner by a slotted guide (17) in its lengthways end region (7a) forming the product off-loading point.

2. Apparatus according to claim 1, characterized in that the displacement guides (15) are constituted by flow guides (8) set on the frame (16) and formed by upright baffles, and by sealing strips (19) which are attached to said flow guides (8) and into which the preparation floor (7) sealingly engages by ledges (20) attached to its long sides.

3. Apparatus according to claim 1 or 2, characterized in that one, two or more preparation floors (7) are displaceably mounted in the frame (16), with each flow guide (8) extending between neighbouring preparation floors (7) forming a displacement guide (15) on both sides.

4. Apparatus according to any of claims 1 to 3, characterized in that on the width-bisecting line of each preparation floor (7) is set a longitudinally-extending flow guide (8) formed by an upright baffle, which extends lengthways down the preparation floor (7) and nearly to the product distributor (9, 10).

5. Apparatus according to any of claims 1 to 4, characterised in that the frame (16) is given rigidity by a plurality of cross-stays (21) and for each product distributor (9, 10) an upright pivoting or rotary axle extends as driving means (18) through one cross-stay (21) in the product off-loading area (7a).

6. Apparatus according to any of claims 1 to 5, characterised in that set on both cross-stays (21) in the product off-loading area (7a) is a push-in guide (22) which runs lengthways down the preparation floor (7) for the slotted guide (17) of said preparation floor (7) and the axle-type driving means (18) of the product distributor (9, 10) extends through the cross-stay (21) and the push-in guide (22).

7. Apparatus according to any of claims 1 to 6, characterised in that the push-in guide (22) is formed by a profile having two push-in channels (22a) of "U" or "J" cross-section on both profile faces, into which channels the slotted guide (17) of the preparation floor (7) engages by sliding ledges (17a).

8. Apparatus according to any of claims 1 to 7, characterised in that angled lead-in pieces (22b) for sliding the preparation floor (7) in by its slotted guide (17) are provided on the leading longitudinal end of each push-in guide (22).

9. Apparatus according to any of claims 1 to 8, characterised in that on both long sides the product distributors (10) formed by baffles have sawtoothed or imbricated driving dogs (10a) for the product being sieved.

10. Apparatus according to any of claims 1 to 9, characterised in that the product distributor(s) (9, 10) is/are kinetically linked via a common linkage (41) to a pressure-medium cylinder (39) arranged beneath the frame (16) and communicating with a control device (23) which operates in dependence on the inclination of the preparation floor.

11. Apparatus according to any of claims 1 to 10, characterised in that in the case of the arrangement comprising two independently displaceable preparation floors (7) arranged alongside one another, one central product distributor (9, 10) is associated with each preparation floor (7) in the frame (16), and one central product distributor (9, 10) is situated in the abutting longitudinal edge area of the two preparation floors (7) and incorporate recessed peripheral areas (17b) so as to form a slotted guide (17).

## Revendications

1. Appareil pour la répartition uniforme de produits dans un dispositif de transport et de criblage oscillant d'une moissonneuse-batteuse pour battage en terrain déclive, avec un plancher de préparation (7), monté, oscillant, sous un dispositif de battage et au-dessus de cribles, avec conduites de courant (8) et, au moins, un répartiteur (9, 10) de produits réglable en fonction de la déclivité du plancher de préparation,
caractérisé en ce que
le plancher de préparation (7) est maintenu, de façon amovible, indépendemment du distributeur (9, 10) de produits, dans un cadre (16) formant des guides de déplacement (15) et qu'en position de travail, dans laquelle il est poussé sous le répartiteur (9, 10) de produits, il saisit le dispositif de commande (18) du répartiteur (9, 10) à l'aide d'un guidage à rainure (17), qui est pratiqué dans sa zone longitudinale (7a), qui forme l'entrée de la moisson.

2. Appareil selon la revendication 1,
caractérisé en ce que
les guides de déplacement (15) consistent en conduites de courant (8) fixes, formées de tôles conductrices, verticales, auxquelles des baguettes d'étanchéité (19) sont fixées, le plancher de préparation (7) s'y engageant à l'aide de barres (20) fixées sur ses côtés longitudinaux.

3. Appareil selon la revendication 1 ou 2,
caractérisé en ce que
un , deux ou plusieurs planchers de préparation (7) sont montés dans le cadre (16), étant déplaçables, chaque conduite de courant (8), disposée entre des planchers de préparation (7) voisins, formant, bilatéralement, un guidage de déplacement (15).

4. Appareil selon l'une des revendications 1 à 3, caractérisé en ce que,
divisant en deux moitiés la largeur de chaque plancher de préparation (7), une conduite de courant (8), formée par une tôle conductrice, verticale, disposée dans le sens de la longueur, est fixée, laquelle s'étend, dans le sens de la longueur du plancher de préparation (7), jusqu'à proximité du répartiteur (9, 10).

5. Dispositif selon l'une des revendicationns 1 à 4,
caractérisé en ce que
le cadre (16) est renforcé à l'aide de plusieurs raidisseurs transversaux (21) et qu'un axe vertical de rotation et de pivotement (18) s'engage, en tant qu'élément de commande de chaque répartiteur (9, 10), dans un raidisseur transversal (21), disposé dans la zone de chargement (7a).

6. Appareil selon l'une des revendications 1 à 5, caractérisé en ce que,
sur les deux raidisseurs transversaux (21) un guidage coulissant (22), s'étendant dans le sens de la longueur du plancher de préparation (7), est fixé pour coopérer avec le guidage à rainure (17) du plan-cher de préparation (7) et que, ce faisant, l'élément d'entraînement (18), formant l'axe du répartiteur (9, 10), s'engage dans le raidisseur transversal (21) et le guidage coulissant (22).

7. Appareil selon l'une des revendications 1 à 6, caractérisé en ce que
le guidage coulissant (22) est formé par un profité avec deux canaux d'emboîtement (22a) de section transversale en U ou en J, s'étendant sur les côtés du guidage coulissant (22), et dans lesquels le guidage à rainure (17) du plancher de préparation (7) s'engage à l'aide de barres de glissement (17a).

8. Appareil selon l'une des revendications 1 à 7, caractérisé en ce que
des pièces obliques d'introduction (22b) sont prévues à l'extrémité d'entrée longitudinale de chaque guidage coulissant (22) pour permettre l'emboîtement du plancher de préparation (7) à l'aide de son guidage à rainure (17).

9. Appareil selon l'une des revendications 1 à 8, caractérisé en ce que
les répartiteurs (10) de produits, formés par des tôles conductrices, présentent, sur leurs deux côtés longitudinaux, des entraîneurs (10a) en forme de dents de scie ou d'écailles, pour l'entraînement des produits à tamiser.

10. Appareil selon l'une des revendications 1 à 9, caractérisé en ce que
le ou les répartiteurs (9, 10) de produits sont reliés par l'intermédiaire d'une timonerie (41) commune (41) et mûs à l'aide d'un cylindre à compression (39) placé sous le cadre (16) et raccordé à un dispositif de commande (23), qui agit en fonction de la déclivité du plancher de préparation.

11. Appareil selon l'une des revendications 1 à 10, caractérisé en ce que,
lorsque deux planchers de préparation (7) sont disposés à côté l'un de l'autre et déplaçables indépendemment l'un de l'autre dans le cadre (16), un répartiteur (9, 10) central est affecté à chaque plancher de préparation (7) et qu'un répartiteur (9, 10) central est placé dans la zone marginale, longitudinale de contiguïté des deux planchers de préparation (7), des zones marginales évidées (17b) étant prévues pour former un guidage à rainure (17).
